# EUROPÄISCHE PATENTANMELDUNG

(11) **EP 2 016 829 A1**
(43) Veröffentlichungstag der Anmeldung: **21.01.2009**
(21) Anmeldenummer: 07014353.2
(22) Anmeldetag: 20.07.2007
(51) Int. Cl.: A22C 11/02

(54) **Verfahren und Vorrichtung zur Herstellung von längenkonstanten Naturdarmprodukten**

(71) Anmelder: Albert Handtmann Maschinenfabrik GmbH & Co. KG, 88400 Biberach (DE)
(72) Erfinder: Baechtle, Manfred, 88433 Schemmerhofen (DE)
(74) Vertreter: Grünecker, Kinkeldey, Stockmair & Schwanhäusser Anwaltssozietät

(57) **Zusammenfassung**

Die Erfindung betrifft eine Vorrichtung und ein Verfahren zum Herstellen von längenkonstanten Wurstportionen, insbesondere Naturdarmprodukten mit: einem Füllrohr zum Befüllen von Wursthüllen mit pastösem Gut, einer Abteileinrichtung zum Abteilen der gefüllten Wursthüllen in einzelne Wurstportionen. Um optisch ansprechende prall gefüllte Naturdarmprodukte zu erhalten umfasst die Vorrichtung einen berührungslosen optischen Sensor zum Messen der Länge und/oder der Geschwindigkeit der befüllten vom Füllrohr abgezogenen Wursthülle, sowie eine Auswerteeinheit, die auf der Grundlage der Messung des Sensors bestimmt, ob die Länge der abgezogenen befüllten Wursthülle einer Sollänge entspricht und bei Erreichen der bestimmten Sollänge ein Abteilsignal an eine Steuerung der Abteileinrichtung ausgibt.

## Beschreibung

Die Erfindung betrifft eine Vorrichtung und ein Verfahren zum Herstellen von längenkonstanten Wurstportionen, insbesondere Naturdarmprodukten.

Die Verarbeitung von Naturdarm ist aufgrund der stark schwankenden Durchmesser problematisch. Bei der Herstellung von Würsten in Naturdarm werden bislang unterschiedliche Verfahren angewandt: gemäß einer ersten Variante stößt eine Füllmaschine pro Portion ein vorbestimmtes Volumen Brät aus. Anschließend wird die Portion abgeteilt bzw. abgedreht. Dies hat zur Folge, dass sich bei unterschiedlichen Durchmessern des Naturdarms auch unterschiedliche Längen der Produkte ergeben. Somit werden Portionen mit weitgehend gleichem Gewicht, aber unterschiedlicher Länge hergestellt.

Zum Ausgleich dieser Schwankungen wurden entsprechend einer zweiten Variante Vorsatzgeräte mit entsprechender mechanischer Ausrüstung eingesetzt. In der Regel wird hier dem Füllrohr ein Transportband oder eine Transportkette nachgeschaltet, welche die Portion synchron zum Füllgutausstoß abtransportiert. Durch diese Art der Produktion werden die Produkte bei gleichem Gewicht auch etwa gleich lang, der technische Aufwand hierfür ist aber recht groß. Hierbei werden Därme benötigt, welche nur geringe Kaliberschwankungen aufweisen. Werden bei dieser Art der Produkte Naturdärme mit großen Kaliberschwankungen verwendet, so können die Produkte nicht gleichmäßig prall gefüllt werden, da sie ja synchron zum Füllgutausstoß abtransportiert werden. Hier entstehen also entweder schlaff gefüllte Produkte, da sie unterfüllt sind oder es kommt zu Darmplatzern, da zu viel Brät in den Darm eingebracht wird.

Hiervon ausgehend liegt der vorliegenden Erfindung die Aufgabe zugrunde, eine Vorrichtung und ein Verfahren bereitzustellen, die optisch ansprechende, prall gefüllte Naturdarmprodukte herstellen können.

Erfindungsgemäß wird diese Aufgabe durch die Merkmale der Ansprüche 1 und 7 gelöst.

Der berührungslose optische Sensor erlaubt eine exakte Messung der Länge und/oder der Geschwindigkeit der befüllten vom Füllrohr abgezogenen Wursthülle. Im Vergleich zu herkömmlich verwendeten Messrollen unterliegt dieses Prinzip keinen Reibungsproblemen. Darüber hinaus tritt kein Schlupf zwischen Wursthülle und einer Messrolle auf, so dass gemäß der vorliegenden Erfindung keine Messfehler auftreten können. Auch die Abteilstellen können gut vermessen werden. Der berührungslose optische Sensor kann entweder direkt die Länge der befüllten vom Füllrohr abgezogenen Wursthüllen, also der einzelnen Wurstportion bestimmen oder aber die Länge aufgrund einer Messung einer dazu proportionalen Größe, wie etwa einer Dopplerfrequenzmessung bzw. einer Geschwindigkeitsmessung ermitteln. Eine Auswerteeinheit kann dann einen Soll-/ Ist-Wert-Vergleich durchführen und bestimmen, ob die Länge der abgezogenen befüllten Wursthülle einem Sollwert entspricht. Bei Erreichen der bestimmten Solllänge wird von der Auswerteeinheit ein Abteilsignal an eine Steuerung der Abteileinrichtung ausgegeben. Somit haben alle nacheinander hergestellten Wurstportionen exakt die gleiche Länge, wobei ungleiche Gewichte aufgrund von Kaliberschwankungen in Kauf genommen werden. Es ergeben sich prall gefüllte Würste mit gleicher Länge, die optisch sehr ansprechend aussehen. Es ist keine zusätzliche Längeneinheit (Transportband) notwendig. Die Würste können nach dem Abteilen direkt sogenannten Aufhängelinien zugeführt werden. Bei der Herstellung der Wurstportionen gemäß der vorliegenden Erfindung hat also nicht das Gewicht, sondern gleiche Länge und die pralle Füllung eines Produkts Priorität.

Vorteilhafterweise ist der Sensor ein Laser-Dopplersensor. Wenn also ein Laserstrahl auf die Wursthülle gestrahlt wird und von der Wursthülle reflektiert wird, haben die reflektierten Strahlen eine im Vergleich zum Laserstrahl veränderte Frequenz, wenn sich die gefüllte Wursthülle mit einer bestimmten Geschwindigkeit bewegt. Dieser Frequenzunterschied beruht auf dem Dopplereffekt und ist abhängig von der bestimmten Geschwindigkeit. Aus den Frequenzunterschied kann beispielsweise die Geschwindigkeit bzw. die Länge der ausgestoßenen Hülle ermittelt werden. Ein solches Messverfahren ist besonders exakt und einfach. Der Sensor kann auch nach dem Ortsfrequenzfilterverfahren arbeiten. Das Ortsfrequenzfilterverfahren basiert auf dem Effekt, dass die von der Wursthülle reflektierte Lichtstärke proportional zur Geschwindigkeit der Wursthülle schwankt, wenn man deren Oberfläche durch ein Raster betrachtet. Der Sensor kann auch eine Kamera umfassen, wobei die Geschwindigkeit bzw. das Ausmaß der Bewegung über die Änderung der von der Kamera aufgezeichneten Bildkoordinaten erfasst wird. Eine solche Kamera ermöglicht die Erfassung der Bewegung in beliebige Richtungen.

Es ist besonders vorteilhaft, wenn der Sensor die Geschwindigkeit der abgezogenen befüllten Wursthülle misst und die Vorrichtung weiter eine Einrichtung zum Erfassen von Darmplatzern in Abhängigkeit der gemessenen Geschwindigkeit der abgezogenen befüllten Wursthülle umfasst. Das bedeutet, dass, wenn die gemessene Geschwindigkeit beim Vergleich mit einem Sollwert diesen Sollwert unterschreitet, ein Darmplatzer festgestellt wird.

Somit kann in vorteilhafter Weise der Sensor sowohl zur Herstellung von längenkonstanten Wurstportionen verwendet werden, als auch zum Detektieren von Wurstplatzern, was die Vorrichtung besonders einfach und kostengünstig macht.

Gemäß einer Ausführungsform der vorliegenden Erfindung sind in Ausstoßrichtung nach der Abteileinrichtung Führungsrollen angeordnet. Diese Führungsrollen halten die gefüllte Wursthülle gegen Verdrehen um deren Längsachse. Es ist keine weitere aufwändig angesteuerte Transporteinrichtung bzw. Längeneinrichtung mehr erforderlich.

Bei dem erfindungsgemäßen Verfahren wird jeweils nach dem Abteilen der befüllten Wursthaut die nächste Portion befüllt, wobei nach dem Abteilen das Messen der Länge der nächsten Portion beginnt.

Gemäß dem erfindungsgemäßen Verfahren ist die Füllzeit pro Portion nicht konstant und hängt ab vom Durchmesser des Naturdarms, so dass die Wurstportionen gleiche Länge und unterschiedliche Gewichte aufweisen. Die vorliegende Erfindung wird nachfolgend unter Bezugnahme folgender Figuren näher erläutert.

Figur 1 zeigt schematisch eine Seitenansicht der vorliegenden Erfindung.

Figur 2 zeigt eine Vergrößerung des in Figur 1 gezeigten linken Abschnitts.

Figur 3 zeigt einen Schnitt entlang der Linie I - I der Figur 2.

Figur 4 zeigt grob schematisch die wesentlichen Elemente der vorliegenden Erfindung.

Figur 5 zeigt einen Funktionsablauf der Abteileinrichtung, der Auswerteeinheit, des Sensors und des Förderwerks gemäß dem erfindungsgemäßen Verfahren.

Figur 6 zeigt schematisch das Messprinzip eines Sensors, der für die vorliegende Erfindung verwendet wird.

Figur 7 zeigt herkömmlich hergestellte Naturdarmprodukte im Vergleich zu Naturdarmprodukten, die gemäß der vorliegenden Erfindung hergestellt wurden.

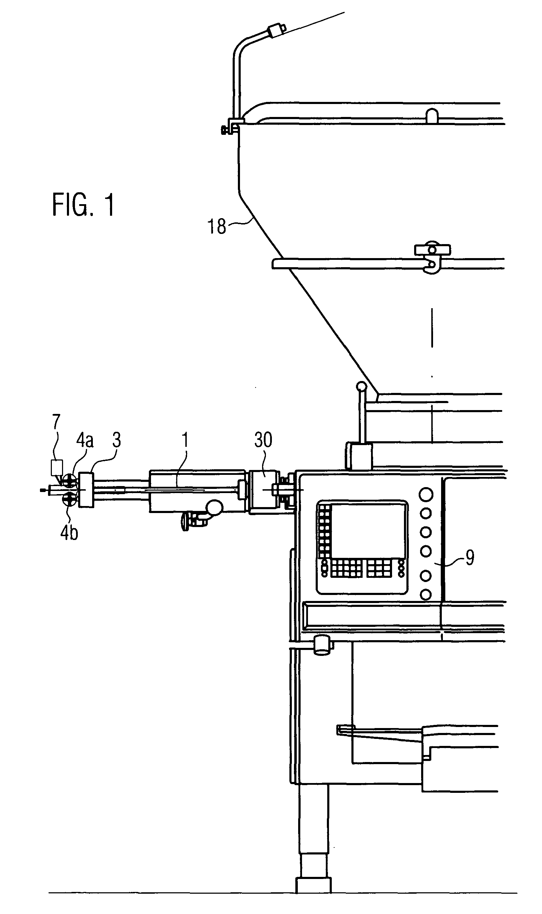

Figur 1 zeigt eine Seitenansicht einer Vorrichtung gemäß der vorliegenden Erfindung. Die in Figur 1 gezeigte Füllmaschine weist ein Gehäuse auf, auf deren Oberseite ein Fülltrichter 18 angeordnet ist, in welchem pastöses Gut, insbesondere Wurstbrät eingefüllt ist.

Unterhalb des Fülltrichters 18 ist als Dosiervorrichtung eine hier nicht dargestellte Fördereinrichtung, z.B. eine Flügelzellenpumpe vorgesehen. An den Auslauf der Flügelzellenpumpe schließt sich, aus dem Gehäuse herausragend, ein Füllrohr 1 an, auf welchem Wursthülle, hier insbesondere Naturdarm, in Form einer Raupe angeordnet ist.

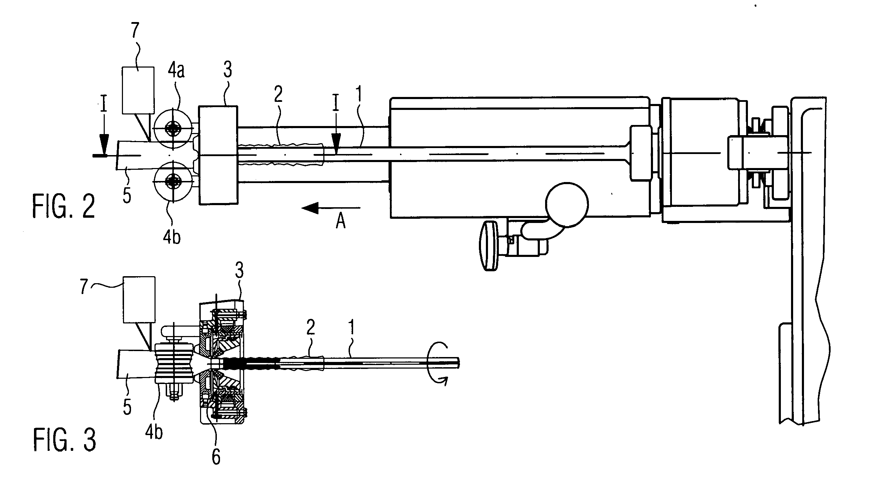

Am hinteren Ende des Füllrohres 1 ist eine Abteilvorrichtung 3 befestigt. Die pastöse Masse wird über die Flügelzellenpumpe durch das Füllrohr 1 in bekannter Weise in die Wursthüllen 2 geschoben. Die Wursthülle 2 wird über die Darmbremse 6 gehalten, wie aus Figur 3 hervorgeht. Die Abteileinrichtung 3 ist in den in Figuren 1 bis 3 gezeigten Ausführungsbeispielen eine Abdreheinrichtung, die einen Antrieb 30 umfasst, der den gefüllten Wurststrang wie durch den Pfeil in Figur 3 dargestellt ist, um seine Längsachse zusammen mit dem Füllrohr 1 verdreht. Somit wird eine Abteilstelle, ein sogenannter Wurstzopf erzeugt. Zum Gegenhalten ist in der Abdreheinrichtung 3 eine Halteeinrichtung vorgesehen, die den gefüllten Wurststrang gegen Verdrehen um die Längsachse hält, damit sich die Abdrehstelle ausbilden kann. Nach der Abteileinrichtung sind die Führungsrollen 4a, 4b vorgesehen, durch die die abgezogene befüllte Wursthülle 5 bewegt wird, und die die befüllte Wursthülle 5 gegen Verdrehen um die Längsachse hält. Die Führungsrollen 4a, b können um eine Achse senkrecht zur Längsachse des Füllrohrs 1 drehbar gelagert sein. Die Führungsrollen 4a, b können auch synchron zum Füllgutausstoß antreibbar sein.

Alternativ zur Abdreheinrichtung 3 kann als Abteileinrichtung 3 eine Verdrängereinrichtung vorgesehen sein, die beispielsweise mit Verdrängerarmen oder Scheren die gefüllte Wursthülle zusammendrückt und das Füllgut verdrängt, so dass es an dieser Stelle Brätfüllgut frei ist. An dieser Stelle kann dann ein entsprechender Metallclip bzw. -Doppelclip zur Unterteilung gesetzt werden.

In Ausstoßrichtung des Füllguts hinter dem Füllrohr 1, hier hinter den Führungsrollen 4a, 4b ist ein berührungsloser optischer Sensor 7 angeordnet. Der Sensor befindet sich etwa in einem Abstand von 2 bis 20 cm zur Oberfläche der befüllten Wursthülle 5. Der berührungslose optische Sensor 7 ist derart ausgebildet, dass er die Länge und/oder die Geschwindigkeit der befüllten vom Füllrohr 1 abgezogenen Wursthülle 5 einer Portion messen kann.

Der Sensor 7 kann beispielsweise ein Laser-Dopplersensor sein, der nach dem Laserdopplerprinzip arbeitet. Dazu weist der Sensor 7 einen Laser auf, der einen Laserstrahl auf die Oberfläche der gefüllten Wursthülle 5 projiziert, wobei der Laserstrahl von der Hülle 5 reflektiert wird. Wenn sich die Hülle 5 in Ausstoß-Richtung A bewegt, haben die reflektierten Strahlen eine zum emittierten Laserstrahl unterschiedliche Frequenz. Der Frequenzunterschied beruht auf dem Dopplereffekt und ist abhängig von der Geschwindigkeit. Über den Frequenzunterschied kann somit die Geschwindigkeit bzw. die zu einen bestimmten Zeitpunkt ausgestoßene Länge bestimmt werden.

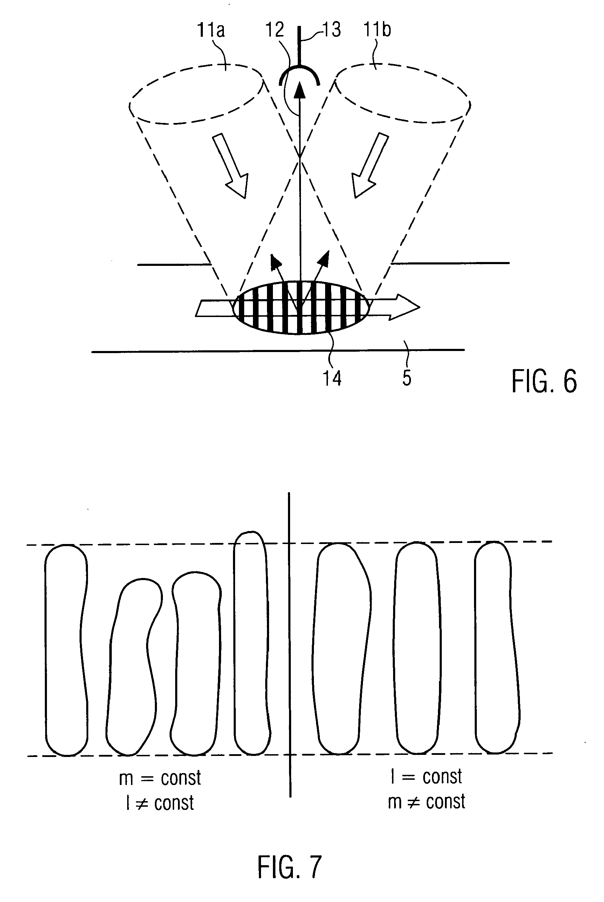

Ein besonders geeigneter Sensor arbeitet nach dem Messprinzip wie es in der Figur 6 näher erläutert wird. Auf die Hülle 5 werden zwei Laserstrahlen 11 a, 11 b gerichtet. Die beiden Laserstrahlen 11 a, 11 b treffen auf der Wursthüllenoberfläche 5 aufeinander und erzeugen das Interferenzstreifenmuster 14. Ein Detektor 13 erfasst das von der Hülle reflektierte Licht 12. Durch die Interferenzstreifen und die Bewegung der streuenden Oberfläche der Hülle 5 wird das in den Detektor 13 rückgestreute Licht in der Intensität moduliert, wobei die Frequenz der Helligkeitsmodulation direkt proportional zur Geschwindigkeit der Hülle und somit zur Dopplerfrequenz ist. Die Verwendung spezieller Marken oder Maßstäbe auf dem Messobjekt ist nicht nötig. Das gestreute Licht wird dann über den Fotodetektor 13 in ein elektrisches Signal umgewandelt und über einen A/D- Wandler einem digitalen Signalprozessor zugeführt. Mit diesem Hochleistungsprozessor wird dann die aktuelle Geschwindigkeit und die aktuelle Weglänge aus dem digitalisierten Signal berechnet.

Die Länge bzw. die Geschwindigkeit der ausgestoßenen Wursthülle 5 kann auch über das Ortsfrequenzfilterverfahren bestimmt werden. Das Ortsfrequenzfilterverfahren beruht ebenfalls auf dem Effekt, dass die reflektierte Lichtstärke proportional zur Geschwindigkeit der Hülle schwankt, wenn man dessen Oberfläche durch ein Raster betrachtet. Hier wird die Hülle mit einem Lichtstrahl, insbesondere Laserstrahl beleuchtet und das reflektierte Licht durch ein Gitter auf einen lichtempfindlichen Detektor abgebildet. Alternativ kann das Gitter per Software durch eine positive und negative Gewichtung der Kamerapixel erzeugt werden. Je schneller sich die Hülle bewegt, desto kürzer werden die Intervalle in denen im Raster Licht reflektiert wird. Somit kann die Geschwindigkeit und damit auch die Länge der zu bestimmten Zeiten ausgestoßenen Hülle bestimmt werden.

Eine weitere Möglichkeit ist als Sensor eine Kamera vorzusehen, wobei die Geschwindigkeit oder das Ausmaß der Bewegung der Hülle über die Änderung der von der Kamera aufgenommenen Bildkoordinaten erfasst wird. Eine solche Messung erlaubt eine Erfassung der Bewegung in mehreren Richtungen. Auch eine Kombination aus Hochgeschwindigkeitskamera, bei der das bewegte Bild mit einer Gitterstruktur überlagert wird, ist denkbar. Der Detektor erzeugt dann ein periodisches Ausgangssignal, dessen Frequenz proportional zur Geschwindigkeit des Objekts ist.

Wesentlich bei diesen oben erläuterten optischen berührungsfreien Sensoren ist, dass die Länge äußerst exakt mit hoher Präzision erfasst werden kann (Messunsicherheit kleiner 0,05 %). Auch die Stillstands- und Richtungserkennung ist möglich. Die Nachteile, die beispielsweise bei mechanischen Messrollen auftreten, können verhindert werden, da kein Schlupf zwischen Hülle und Reibrad auftreten kann. Auch die Abteilstellen können erfasst werden, so dass die Gesamtlänge einer Portion genau bestimmt werden kann.

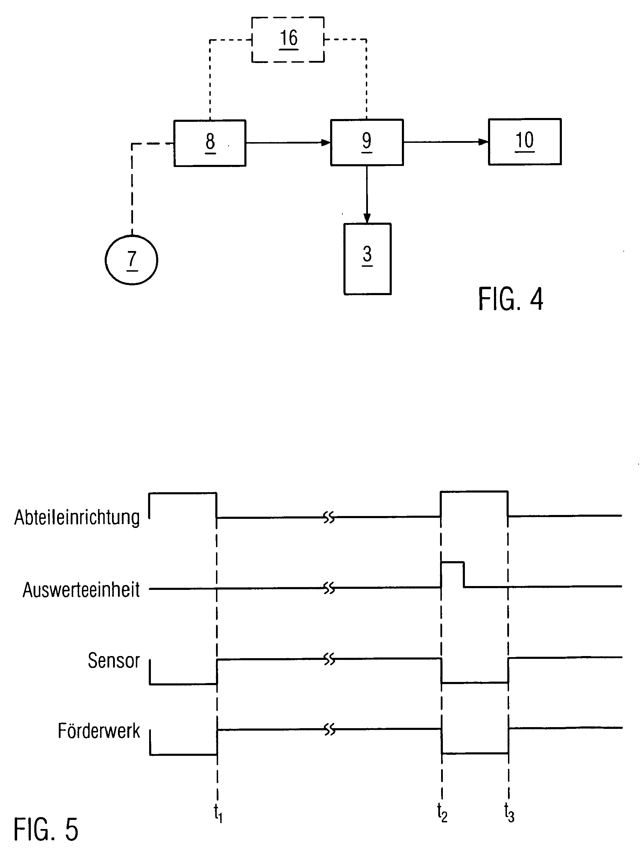

Wie insbesondere aus Figur 4 hervorgeht, ist der Sensor 7 mit einer Auswerteeinheit 8 verbunden, die auf der Grundlage der Messung des Sensors 7 bestimmt, ob die Länge der abgezogenen befüllten Wursthülle 5 einer Solllänge entspricht. Dazu erfolgt ein Vergleich der gemessenen Länge mit einer vorab in die Füllmaschine 10 eingegebenen Solllänge. Bei Erreichen der bestimmten Solllänge kann dann die Auswerteeinheit 8 ein Signal an die Steuerung 9, hier die Steuerung 9 der Füllmaschine leiten, die wiederum ein Abteilsignal an die Abteileinrichtung 3 leiten kann, zum Abteilen der befüllten Hülle 5. Somit kann eine Wurstportion mit exakt vorbestimmter Länge, die darüber hinaus prall befüllt ist, hergestellt werden. Hier werden allerdings ungleiche Gewichte der verschiedenen Portionen aufgrund von Kaliberschwankungen in Kauf genommen.

Die Steuerung 9 ist unter anderem auch mit dem Antrieb für die Fördereinrichtung, d.h. die Flügelzelle verbunden. Im Falle einer Abdreheinrichtung als Abteileinrichtung 3 kann während des Abteilens der Füllgutstrom gedrosselt, bzw. gestoppt werden, um ein Aufstauen des Füllguts zu verhindern. Für den Fall, dass als Abteileinrichtung Verdrängerelemente verwendet werden, ist eine solche Drosselung des Füllgutstroms bzw. das Stoppen des Füllgutstroms nicht notwendig.

Wie durch die gepunkteten Linien in Figur 4 dargestellt ist, kann die Auswerteeinheit 8 (oder der Sensor 7) mit einer Einrichtung 16 zum Erfassen von Darmplatzern in Abhängigkeit der gemessenen Geschwindigkeit der abgezogenen befüllten Wursthüllen 5 verbunden sein. Liegt beispielsweise die Geschwindigkeit, d. h. Länge pro Zeit der abgezogenen Hülle 5 unterhalb eines vorab eingestellten Schwellwerts, so bestimmt die Einrichtung 16, dass ein Wursthüllenplatzer vorliegt. Die Einrichtung 16 kann dann ein Signal an die Steuerung 9 abgeben, die die Füllmaschine stoppt. Zusätzlich oder alternativ kann ein entsprechendes optisches oder akustisches Warnsignal ausgegeben werden. Somit kann in geschickter Art und Weise der Sensor 7 nicht nur zur Herstellung von längenkonstanten Naturprodukten verwendet werden, sondern gleichzeitig auch zum Erfassen von Darmplatzern, was die Vorrichtung einfach und kostengünstig macht.

Nachfolgend wird das erfindungsgemäße Verfahren insbesondere in Zusammenhang mit den Figuren 4, 5 und 7 näher erläutert. Bei der Herstellung einer Wurstportion wird mit Hilfe des Förderwerkes kontinuierlich Füllgut aus dem Trichter 18 über das Füllrohr 1 unter Druck in die Wursthülle 2 geschoben. Dabei ist der Füllgutstrom im wesentlichen konstant. Das Füllgut wird in die Hülle gedrückt, wobei kontinuierlich Wursthülle 2 von dem gerafften Vorrat auf dem Füllrohr 1 abgezogen wird. Mit Beginn des Füllens, d.h. nach dem die Abteileinrichtung das Abteilen einer vorhergehenden Portion beendet hat, wird, wie insbesondere aus Figur 5 hervorgeht, zu einem Zeitpunkt t1 mit der Messung der Länge bzw. der Geschwindigkeit der sich in Ausstoßrichtung A bewegenden Hülle begonnen. Während das Förderwerk kontinuierlich Füllgut fördert, misst der Sensor 7 kontinuierlich, wobei die Auswerteeinheit 8 auf der Grundlage der Messungen bestimmt, ob die Länge der abgezogenen befüllten Wursthaut 5 einer Solllänge entspricht. Ergibt der Vergleich, dass die Länge der abgezogenen befüllten Wursthaut 5 der Solllänge entspricht, so gibt die Auswerteeinheit 8 ein Signal an die Steuerung 9, die wiederum ein Abteilsignal an die Abteileinrichtung 3, 30 abgibt, die dann den Abteilvorgang vornimmt (Zeitpunkt t2). Dazu wird bei den in den Figuren 1 bis 3 gezeigten Ausführungsbeispiel die befüllte Wursthülle 5 gegen Verdrehung um die eigene Längsachse gehalten, während der Antrieb 30 der Abdreheinrichtung 3 das Füllrohr um die Längsachse des Füllrohrs dreht (siehe Figur 3). Während des Abdrehvorgangs (t2 bis t3) kann der Vorschub durch die Fördereinrichtung gedrosselt bzw. gestoppt werden, um ein Aufstauen von Füllgut zu verhindern. Im Falle einer Verdrängereinrichtung als Abteileinrichtung ist eine solche Drosselung des Füllgutstroms nicht notwendig. Nach Beendigung des Abteilvorgangs zum Zeitpunkts t3 ist die Herstellung der entsprechenden Portion beendet und der zuvor erläuterte Vorgang wiederholt sich, wobei der Sensor zurückgesetzt worden ist und zum Zeitpunkt t3 die Messung der Länge bzw. der Geschwindigkeit der vom Füllrohr abgezogenen Wursthülle der nächsten Portion beginnt, bis die Länge wieder der entsprechenden Solllänge entspricht.

Wie aus den vorherigen Erläuterungen deutlich wurde, können gemäß der vorliegenden Erfindung längenkonstante Naturdarmprodukte hergestellt werden, wobei ungleiche Gewichte aufgrund von Kaliberschwankungen in Kauf genommen werden. Das bedeutet, dass nicht, wie bislang der Fall, das Gewicht die Priorität aufweist, sondern gleiche Länge und pralle Füllung eines Produkts. Das bedeutet wiederum, dass die Füllzeit t1 bis t2 für unterschiedliche Portionen unterschiedlich sein wird und zwar abhängig von den Durchmessern des Naturdarms. Somit weisen die einzelnen Wurstportionen gleiche Länge und unterschiedliche Gewichte auf. Es gibt Gewichtsschwankungen in einem Bereich von 1 bis 25 %. Figur 7 zeigt auf der linken Seite herkömmliche Naturdarmprodukte, die jeweils gleiches Gewicht aufweisen. Aufgrund der unterschiedlichen Durchmesser des Naturdarms ergeben sich unterschiedliche Längen (Masse m ist konstant, Länge I ist nicht konstant). Im Gegensatz dazu weisen die gemäß der vorliegenden Erfindung hergestellten Naturdarmprodukte exakt die gleiche Länge I auf, haben jedoch eine unterschiedliche Masse m (Länge I ist konstant, Masse m ist nicht konstant).

Tritt bei dem erfindungsgemäßen Verfahren ein Wursthüllenplatzer auf, so verändert sich die Geschwindigkeit in Ausstoßrichtung A. Eine Einrichtung 16 zum Erkennen von Wursthüllenplatzern vergleicht im Zeitabschnitt t1 bis t2 die Geschwindigkeit der gefüllten Wursthülle 5 mit einer Sollgeschwindigkeit. Bei Unter- oder Überschreiten der Geschwindigkeit wird angenommen, dass es sich um einen Wursthüllenplatzer handelt. Die Einheit 16 kann dann ein Signal an die Steuerung 9 der Füllmaschine geben und die Füllmaschine stoppen und/oder ein optisches oder akustisches Signal ausgeben.

Zum Erhalten von gleichen Längen sind hier keine weiteren Längeneinrichtungen mehr notwendig. Nach dem Abteilen der Wursthülle können die Einzelportionen unmittelbar an eine Aufhängelinie weitergeleitet werden.

## Patentansprüche

1. Vorrichtung (10) zum Herstellen von längenkonstanten Wurstportionen, insbesondere Naturdarmprodukten, mit
einem Füllrohr (1) zum Befüllen von Wursthüllen (2) mit pastösem Gut und mit einer Abteileinrichtung (3) zum Abteilen der gefüllten Wursthülle (5) in einzelne Wurstportionen,
**gekennzeichnet durch**
einen berührungslosen, optischen Sensor (7) zum Messen der Länge und/oder der Geschwindigkeit der befüllten vom Füllrohr (1) abgezogenen Wursthülle (5), der in Ausstoßrichtung hinter dem Füllrohr (1) angeordnet ist, und
eine Auswerteeinheit (8), die auf Grundlage der Messung des Sensors (7) bestimmt, ob die Länge der abgezogenen, befüllten Wursthülle (5) einer bestimmten Solllänge entspricht und bei Erreichen der bestimmten Solllänge ein Abteilsignal an eine Steuerung (9) der Abteileinrichtung (3) ausgibt.

2. Vorrichtung nach Anspruch 1,
**dadurch gekennzeichnet, dass**
der Sensor ein Laser-Dopplersensor ist.

3. Vorrichtung nach Anspruch 1 oder 2,
**dadurch gekennzeichnet, dass**
der Sensor nach dem Ortsfrequenzfilterverfahren arbeitet.

4. Vorrichtung nach Anspruch 1,
**dadurch gekennzeichnet, dass**
der Sensor eine Kamera umfasst, wobei die Geschwindigkeit über die Änderung der von der Kamera aufgezeichneten Bildkoordinaten erfasst wird.

5. Vorrichtung nach mindestens einem der Ansprüche 1 bis 4,
**dadurch gekennzeichnet, dass**
der Sensor (3) die Geschwindigkeit der abgezogenen, befüllten Wursthülle (5) misst und die Vorrichtung weiter eine Einrichtung zum Erfassen von Darmplatzern in Abhängigkeit der gemessenen Geschwindigkeit der abgezogenen, befüllten Wursthülle (5) umfasst.

6. Vorrichtung nach mindestens einem der Ansprüche 1 bis 5,
**dadurch gekennzeichnet, dass**
in Ausstoßrichtung nach der Abteileinrichtung Führungsrollen (4a, 4b) angeordnet sind.

7. Verfahren zum Herstellen von längenkonstanten Wurstportionen, insbesondere Naturdarmprodukten, mit folgenden Schritten:
a) Füllen einer Wursthülle (2) mit Hilfe eines Füllrohrs (1),
b) berührungsloses, optisches Messen der Länge und/oder Geschwindigkeit der befüllten, vom Füllrohr (1) abgezogenen Wursthülle (5)
c) Bestimmen, ob die Länge der abgezogenen befüllten Wursthaut einer Solllänge entspricht, auf der Grundlage der Messwerte in Schritt b) und
d) Abteilen der befüllten Wursthaut (5), wenn die Länge der abgezogenen, befüllten Wursthaut der Solllänge entspricht.

8. Verfahren nach Anspruch 7,
**dadurch gekennzeichnet, dass**
die Wursthülle ein Naturdarm ist.

9. Verfahren nach Anspruch 7 oder 8,
**dadurch gekennzeichnet, dass**
nach Schritt d) die Schritte b) bis d) wiederholt werden, wobei die Messung der Länge für die nachfolgende Portion rückgesetzt wird und neu beginnt.

10. Verfahren nach mindestens einem der Ansprüche 7 bis 9,
**dadurch gekennzeichnet, dass**
die gemessene Geschwindigkeit mit einem Sollwert verglichen wird und bei Unter-oder Überschreiten des Sollwerts ein Darmplatzer festgestellt wird.

11. Verfahren nach mindestens einem der Ansprüche 7 bis 10,
**dadurch gekennzeichnet, dass**
in Schritt a) die Füllzeit pro Wurstportion nicht konstant ist, so dass die Wurst der hergestellten Wurstportionen gleiche Länge und unterschiedliche Gewichte aufweisen.
